# EUROPEAN PATENT APPLICATION

(11) **EP 4 388 849 A1**
(43) Date of publication of application: **26.06.2024**
(21) Application number: 23215716.4
(22) Date of filing: 12.12.2023
(51) Int. Cl.: A01D 34/00

(54) **ROBOTIC LAWNMOWER AND BELLOWS ELEMENT**

(30) Priority: 22.12.2022 SE 2251546
(71) Applicant: Husqvarna AB, 561 82 Huskvarna (SE)
(72) Inventor: SMITH, Chris, Huskvarna (SE); ROWNTREE, David, Huskvarna (SE)

(57) **Abstract**

A robotic lawnmower comprises a chassis, an outer shell defining an exterior face of the robotic lawnmower, and a shell suspension arrangement movably connecting the outer shell to the chassis, the shell suspension arrangement comprising at least one shell support lever assembly comprising a shell support lever movably arranged relative to the chassis, and a bellows element (34) sealing between the shell support lever and the chassis. The bellows element (34) comprises a flexible bellows (36) of thermoplastic vulcanizate integrally formed with a rigid mounting substrate (38) of thermoplastic.

## Description

### Field of the invention

The present invention relates to a robotic lawnmower and a bellows element.

### Background

Since their introduction on the market, robotic lawnmowers have facilitated lawn maintenance considerably. Typically, robotic lawnmowers comprise a self-propelled chassis covered by an outer shell. A robotic lawnmower typically detects collision and/or lift events by detecting a relative movement between the outer shell and the chassis. The movable suspension between the outer shell and the chassis, with any detection arrangement associated therewith, is often complex and expensive. It should preferably also be weatherproof over the operation life of the robotic lawnmower. EP 3 470 311 B1 discloses the suspension arrangement of an exemplary robotic lawnmower.

### Summary

It is an object of the present invention to address the above issues. To this end, according to a first aspect there is provided a robotic lawnmower comprising: a chassis provided with a set of wheels; an outer shell defining an exterior face of the robotic lawnmower; a shell suspension arrangement movably connecting the outer shell to the chassis, the shell suspension arrangement comprising at least one shell support lever assembly, the at least one shell support lever assembly comprising a respective shell support lever movably arranged relative to the chassis, and a respective bellows element sealing between the shell support lever and the chassis, wherein the bellows element comprises a flexible bellows of a first, relatively softer material integrally formed with a mounting substrate of a second, relatively harder material, wherein the relatively softer material is softer than the relatively harder material. Thanks to the integration of the bellows element with the mounting substrate, assembly of the robotic lawnmower is facilitated, and the risk of errors in assembly is reduced. Moreover, resistance against dirt and moist is improved. The flexible bellows and the mounting substrate may be integrally formed of different materials by e.g. two-shot injection moulding using different materials for the two shots. A distal end of the shell support lever may be attached to the outer shell. The shell support lever may be pivotal in relation to the chassis about a home position, to enable the outer shell to translate along the chassis. Such movement may occur, for example, when the robotic lawnmower collides with an object. Alternatively or additionally, the distal end of the shell support lever may be axially movable along an axis of the shell support lever, to enable the distance between the outer shell and the chassis to be changed. Such movement may occur, for example, when the robotic lawnmower is lifted by the outer cover. The shell support lever may, for example, be telescopic to allow the distal end to axially move. According to embodiments, the shell suspension arrangement may comprise a collision and/or lift sensing arrangement configured to detect a movement of the outer shell in relation to the chassis. The collision and/or lift sensing arrangement may be a part of the shell support lever assembly. According to embodiments, the robotic lawnmower may comprise a plurality of shell support lever assemblies as defined above.

According to embodiments, the first material may be a thermoplastic elastomer and the second material may be a thermoplastic. The combination of a thermoplastic with a thermoplastic elastomer facilitates obtaining a strong bond between the first and second materials, and a resulting high durability of the interface between the two materials.

According to embodiments, the thermoplastic elastomer may be thermoplastic vulcanizate. Thereby, a high sealing performance, in combination with a high elastic recovery and a high degree of resistance against flex fatigue, may be obtained. Thermoplastic vulcanizate typically comprises vulcanized rubber particles encapsulated in a thermoplastic matrix. The thermoplastic vulcanizate of the first material may, for example, comprise at least 20% by weight of said vulcanized rubber particles, and the thermoplastic matrix may, for example, comprise at least 50% by weight of polypropylene. According to further embodiments, the thermoplastic vulcanizate comprises at least 40% by weight of said vulcanized rubber particles. Preferably, the vulcanized rubber particles have an average size of less than 200µm. The vulcanized rubber particles may, by way of example, be EPDM (ethylene propylene diene monomer) rubber particles.

According to embodiments, the second material may comprise a base polymer of polypropylene. The combination with a polypropylene-based matrix of the thermoplastic vulcanizate of the first material results in a particularly strong bond between the bellows and the mounting substrate. The base polymer may further comprise a filler, e.g. talc, and/or one or several additives.

According to embodiments, the first material may comprise at least 0,5 % by weight of polysiloxane. The polysiloxane increases the tearing strength of the bellows, which facilitates handling of the bellows element during manufacture and assembly. According to embodiments, the polysiloxane is a polydimethylsiloxane.

According to embodiments, a bonding interface between the first and second materials may be free from structural interlocks between the first and second materials. In particular, the combination of a thermoplastic with a thermoplastic elastomer enables a purely bonded interface without interlocking structures, which facilitates manufacture of the bellows element.

According to embodiments, the bellows may extend along a centre axis of the bellows, and be defined by a bellows mantle enclosing the centre axis, wherein the bellows mantle comprises, distributed along the centre axis, a plurality of circumferential bulges separated by waists. The centre axis, which may be straight or curved, extends along the geometric centre of the bellows from the mounting substrate to an end cuff adapted to seal against the shell support lever. The bellows mantle may, as seen in a section perpendicular to the centre axis, have a circular shape.

According to embodiments, when the bellows is in an elastically relaxed state, at least one waist may have, as seen in a section plane along the centre axis, a smallest inner radius of curvature exceeding 0,5 mm. Such a radius of curvature increases the life expectancy of the bellows. Preferably, each of said waists has, as seen in said section plane, a respective smallest inner radius of curvature exceeding 0,5 mm.

According to embodiments, when the bellows is in an elastically relaxed state, at least one circumferential bulge may have, as seen in a section plane along the centre axis, a smallest inner radius of curvature exceeding 1 mm. Such a radius of curvature increases the life expectancy of the bellows. Preferably, each of said circumferential bulges has, as seen in said section plane, a respective smallest inner radius of curvature exceeding 1 mm.

According to embodiments, when the bellows is in an elastically relaxed state, a waist of the bellows may have a total waist angle of more than 40°. Such a total waist angle increases the life expectancy of the bellows. Preferably, each of said waists has a respective total waist angle of more than 40°. Even more preferred, the total waist angle may be between 45° and 60°.

According to embodiments, when the bellows is in an elastically relaxed state, the waists may be distributed along the centre axis with an average axial waist separation distance exceeding 7 mm. Such an axial separation distance increases the life expectancy of the bellows. According to embodiments, the bellows comprises five waists or less, and/or five bulges or less. Thereby, a compact arrangement of the bellows may be combined with a large axial waist separation distance.

According to embodiments, when the bellows is in an elastically relaxed state, the bellows may have an inner bulge/waist width ratio of less than 2,0. Such an inner bulge/waist width ratio increases the life expectancy of the bellows.

According to embodiments, the bellows mantle may have an average thickness exceeding 0,7 mm. Such a thickness provides, particularly in combination with a bellows mantle of thermoplastic vulcanizate, an attractive elastic recovery of the bellows mantle. According to further embodiments, the bellows mantle may have an average thickness of between 0,7 mm and 1,3 mm. Such a thickness optimizes the balance between elastic recovery and life expectancy of the bellows.

According to embodiments, the at least one shell support lever assembly may comprise a bias element biasing the shell support lever in an axial direction of the shell support lever, wherein a bottom face of the mounting substrate, opposite to the bellows, comprises a mounting socket receiving the bias element. The bias element may comprise a coil spring. The axis of the shell support lever may be pivotal in relation to the chassis about a home position, and the axial bias of the bias element may operate to return the shell support lever, when pivoted, towards the home position.

According to embodiments, the mounting substrate may comprise a cantilever hook arrangement. A cantilever hook arrangement facilitates assembly. Alternatively or additionally, the mounting substrate may comprise one or more mounting screw holes.

According to a second aspect, there is provided a bellows element for sealing between a support structure and a movable element, such as a rod, shaft or similar, which is movable in relation to the support structure, the bellows element comprising a flexible bellows of thermoplastic vulcanizate integrally formed with a rigid mounting substrate of thermoplastic for mounting the bellows element to the support structure. Such a bellows element combines ease of manufacture of the bellows element as such, with easy and automatable assembly of the bellows element in a sealing application, along with high sealing performance, high elastic recovery and a high degree of resistance against flex fatigue. The bellows element may, for example, be arranged at various positions in a robotic outdoor tool, such as a robotic lawnmower. Alternatively, the bellows may be used in e.g. automotive applications.

According to embodiments, the thermoplastic vulcanizate may comprise vulcanized rubber particles encapsulated in a thermoplastic matrix comprising polypropylene, and the thermoplastic of the mounting substrate rigid mounting substrate comprises a base polymer of polypropylene. The bellows element may be configured in accordance with any of the embodiments of the bellows element of the robotic lawnmower defined hereinabove. The bellows element may, for example, be used for sealing between a chassis and a vertically adjustable grass cutting assembly, with the respective shapes of the mounting substrate and the bellows adapted accordingly.

It is noted that embodiments of the invention may be obtained by all possible combinations of features recited in the claims and in the further embodiments defined hereinabove.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a view in perspective of a robotic lawnmower system comprising a robotic lawnmower;
Fig. 2 is a perspective view of the robotic lawnmower of Fig. 1 as seen obliquely from above, with an outer shell removed from a chassis of the robotic lawnmower to expose a shell suspension arrangement;
Fig. 3A is a magnified view in perspective of a shell support lever assembly of the shell suspension arrangement of Fig. 2 prior to attaching to the chassis;
Fig. 3B is a perspective view of the shell support lever assembly of Fig. 3A after having been attached to the chassis;
Fig. 4 is a perspective view of the robotic lawnmower of Fig. 1 as seen obliquely from below, with the outer shell removed from the chassis to expose the bottom face of the outer shell;
Fig. 5 is a vertical section through the robotic lawnmower of Fig. 1 at the position of the shell support lever assembly of 3A;
Fig. 6 is a view in perspective of the shell support lever assembly of 3A;
Fig. 7 is a view in perspective of the shell support lever assembly of Fig. 6 with a bellows element of the shell support lever assembly in section to expose interior parts of the shell support lever assembly;
Fig. 8 is an exploded view of the shell support lever assembly of Fig. 6;
Fig. 9 is a view in perspective of the bellows element of the shell support lever assembly of Fig. 6;
Fig. 10 is a top plan view of the bellows element of Fig. 9; and
Fig. 11 is a section of the bellows element of Fig. 9, the section taken along the line XI-XI of Fig. 10.

All the figures are schematic, not necessarily to scale, and generally only show parts which are necessary in order to elucidate the embodiments, wherein other parts may be omitted.

### Detailed description of the exemplary embodiments

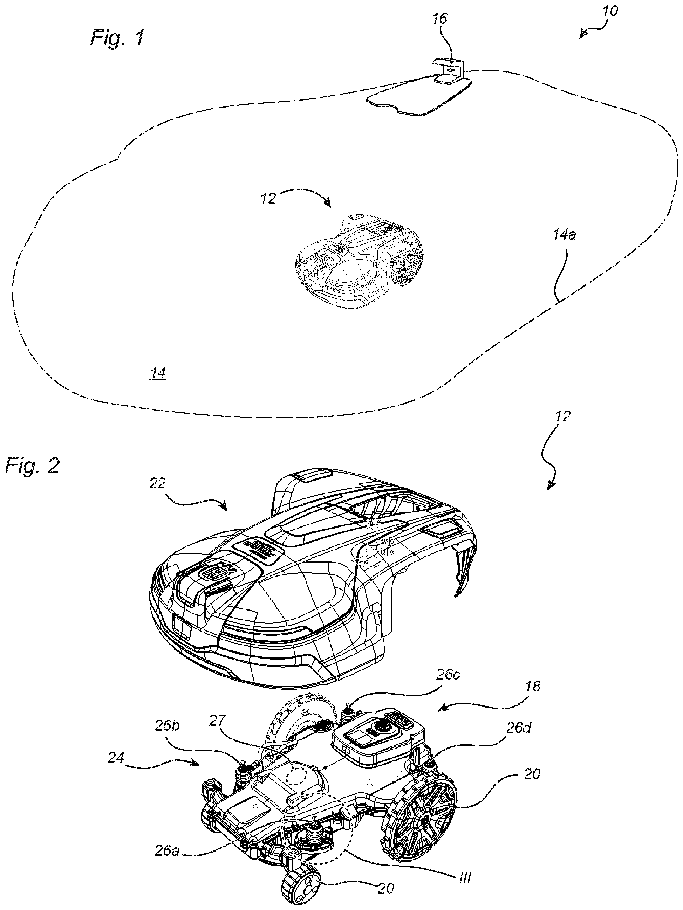

Fig. 1 schematically illustrates a robotic lawnmower system 10 comprising a self-propelled robotic lawnmower 12, which is configured to autonomously navigate a work area 14 to cut grass, and a battery charging station 16 for charging a battery internal to the robotic lawnmower 12. The work area boundary 14a may be defined by e.g. a boundary cable, or may be configured as a virtual perimeter, i.e. a geofence.

Fig. 2 illustrates the robotic lawnmower 12 in greater detail. The robotic lawnmower 12 comprises a chassis 18 provided with a set of wheels 20, and an outer shell 22 defining an exterior face of the robotic lawnmower 12. The outer shell 22 is movably connected to the chassis 18 via a shell suspension arrangement 24, which comprises a first, a second, a third and a fourth shell support lever assembly 26a, 26b, 26c, 26d attached to the chassis 18. The shell support lever assemblies 26a, 26b, 26c, 26d are identical; in the following, only the first shell support lever assembly 26a will be described in detail, and simply referred to as the shell support lever assembly.

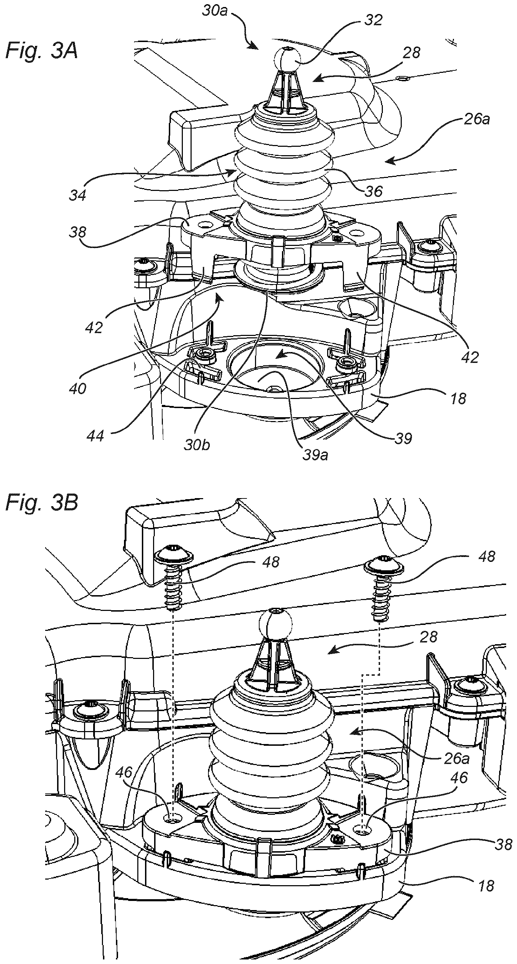

Fig. 3A illustrates the shell support lever assembly 26a prior to attaching to the chassis 18 and the outer shell 22. The shell support lever assembly 26a comprises a shell support lever 28 which, when the shell support lever assembly 26 is attached to the chassis 18, is movable in relation to the chassis 18. A distal end 30a of the shell support lever 28 is provided with a spherical bearing stud 32 of a ball joint. The bearing stud 32 is, when the robotic lawnmower 12 (Fig. 1) is fully assembled, attached to a ball joint socket (not illustrated) on a lower face of the outer shell 22 (Fig. 2). The shell support lever assembly 26a further comprises a bellows element 34 comprising a flexible bellows 36 and a rigid mounting substrate 38. A lower, proximal end 30b of the shell support lever 28 extends through the mounting substrate 28, and into a support lever socket 39 in the chassis 18. The mounting substrate 38 comprises a cantilever hook arrangement 40 comprising a set of resiliently flexible cantilevers 42, which are used for snapping the mounting substrate 38 to the chassis 18. For the purpose, a set of cantilever sockets 44, arranged in a pattern mating with the pattern of the set of cantilevers 42, are arranged on the chassis 18 adjacent to the support lever socket 39.

Fig. 3B illustrates the shell support lever assembly 26a snapped to the chassis 18. The mounting substrate 38 comprises a set of mounting screw holes 46 enabling the shell support lever assembly 26a to be firmly anchored to the chassis 18 by a set of screws 48.

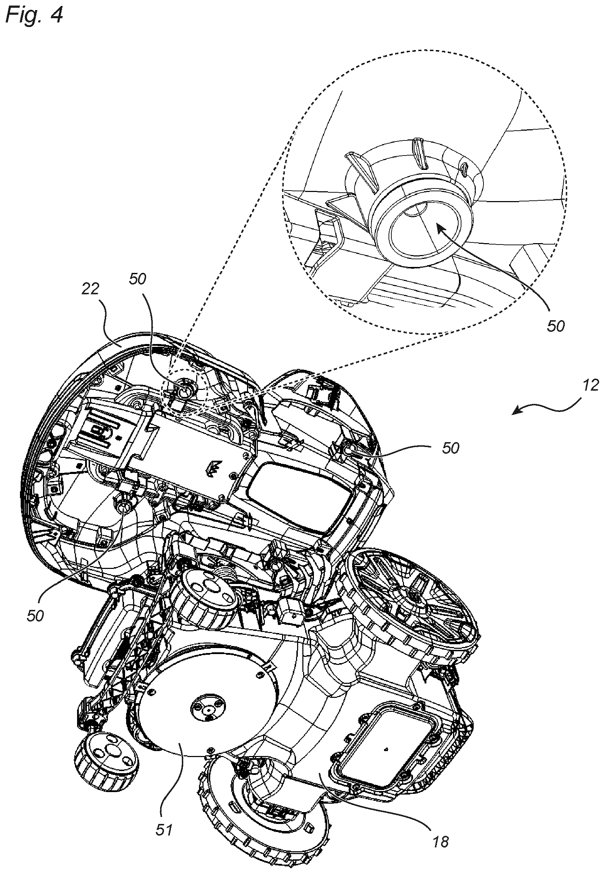

Fig. 4 illustrates the robotic lawnmower 12 as seen from below, and with the outer shell 22 removed from the chassis 18. A cutting assembly 51 is vertically adjustable in relation to the chassis 18, to enable the grass cutting height to be adjusted. A set of ball joint sockets 50 are configured to receive the bearing studs 32 (Fig. 3A) of the shell support lever assemblies 26a, 26b, 26c, 26d (Fig. 2). The ball joint sockets 50 are slightly expandable, such that the bearing studs 32 can be snapped into the respective ball joint sockets 50. Thereby, the outer shell 22 can be snapped into and out of attachment to the chassis 18 via the ball joints.

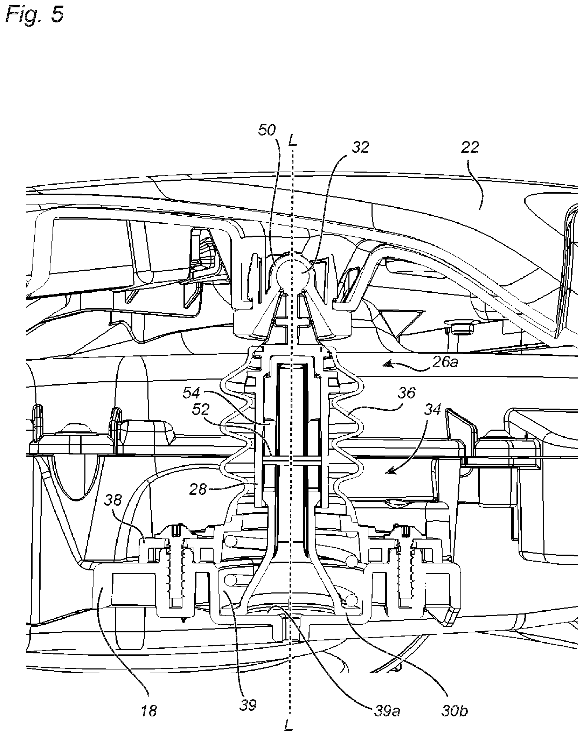

Fig. 5 illustrates a section through the shell support lever assembly 26a when snapped to the outer shell 22. The view of Fig. 5 illustrates the shell support lever 28 in a home position, in which the proximal end 30b of the shell support lever 28 is seated against the bottom face of the support lever socket 39 of the chassis 18, which operates as a lever seat 39a. When seated, a lever axis L of the shell support lever extends perpendicular to the plane of engagement of the support lever 28 against the lever seat 39a. From the section of Fig. 5, it is also apparent that the bellows element 34 seals between the shell support lever 28 and the chassis 18.

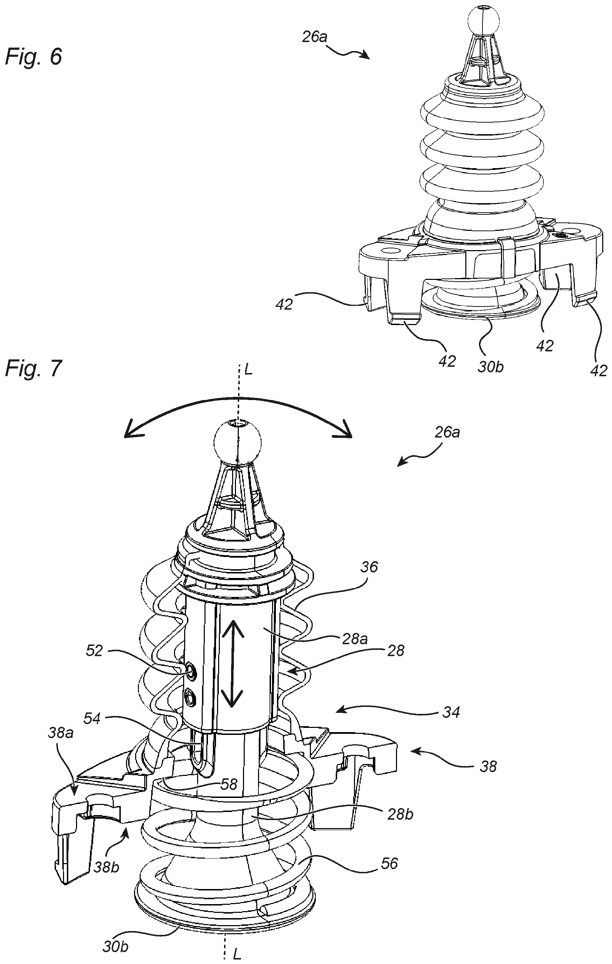

Fig. 6 is a perspective view of the shell support lever assembly 26a in isolation, whereas Fig. 7 illustrates a similar view which illustrates the bellows element 34 in section to fully expose the shell support lever 28. The shell support lever 28 is telescopic, and comprises an upper section 28a and a lower section 28b which can telescopically translate in relation to each other along the lever axis L. In the illustrated example, the lower section 28b telescopically extends into the upper section 28a. A guide pin 52 attached to the upper section 28a extends, transversal to the lever axis L, through the lower section 28b. The guide pin 52 rides in an axial guide track 54 within the lower section 28b, and rotationally locks the upper section 28a to the lower section 28b. The engagement between the guide pin 52 and the guide track 54 also limits the axial travel range of the upper section 28a in relation to the lower section 28b. A bias element, embodied as a coil spring 56, biases the proximal end 30b of the shell support lever 28 against the lever seat 39a of the support lever socket 39 (Fig. 5), in the axial direction L of the shell support lever 28. The lever 28 is pivotal about its proximal end 30b. By pressing the proximal end 30b of the shell support lever 28 against the lever seat 39a, the coil spring 56 operates to, if the shell support lever 28 is pivoted about its lower end 30b, return the shell support lever 28 to its home position defined by the full engagement between the proximal end 30a of the shell support lever 28 and the lever seat 39a.

The mounting substrate 38 has an upper face 38a, facing in the direction of the bellows 36, and a lower face 38b opposite to the bellows 36, and an upper end of the coil spring 56 rests on the lower side 38b of the mounting substrate 38. For the purpose, the bottom face 38b of the mounting substrate 38 has a spring mounting socket 58 which receives the upper end of the coil spring 56. The lower end of the coil spring 56 rests against a flange of the lower end 30b of the shell support lever 28.

Referring back to Fig. 2, a sensing arrangement 27, configured to sense a movement of the outer shell 22 in relation to the chassis 18, is arranged on the chassis 18. The sensing arrangement 27 is configured to detect a horizontal displacement of the outer shell 22 in relation to the chassis 18, and in response thereto determine that a collision event has occurred. Similarly, the sensing arrangement 27 is configured to detect a vertical displacement of the outer shell 22 in relation to the chassis 18, and in response thereto determine that a lift event has occurred. The sensing arrangement 27 may comprise, for example, one or several Hall effect sensors configured to sense the position(s) of one or several magnets (not illustrated) attached to the bottom face of the outer shell 22. Alternatively, with reference to Fig. 7, the sensing arrangement 27 may comprise sensors (not illustrated) arranged in respective ones of the shell support assemblies 26a-d (Fig. 2), and configured to detect the positions of the shell support levers 28 of the respective shell support assemblies 26a-d in relation to the chassis 18.

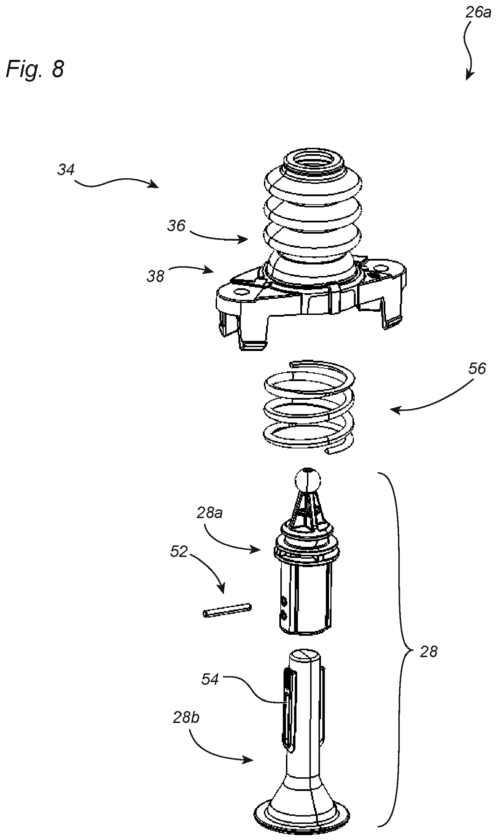

Fig. 8 is an exploded view of the shell support lever assembly 26a, clearly illustrating the bellows element 34, the coil spring 56, the upper and lower sections 28a, 28b of the shell support lever 28, and the guide pin 52 which rides in the guide track 54 of the lower section 28b of the shell support lever 28.

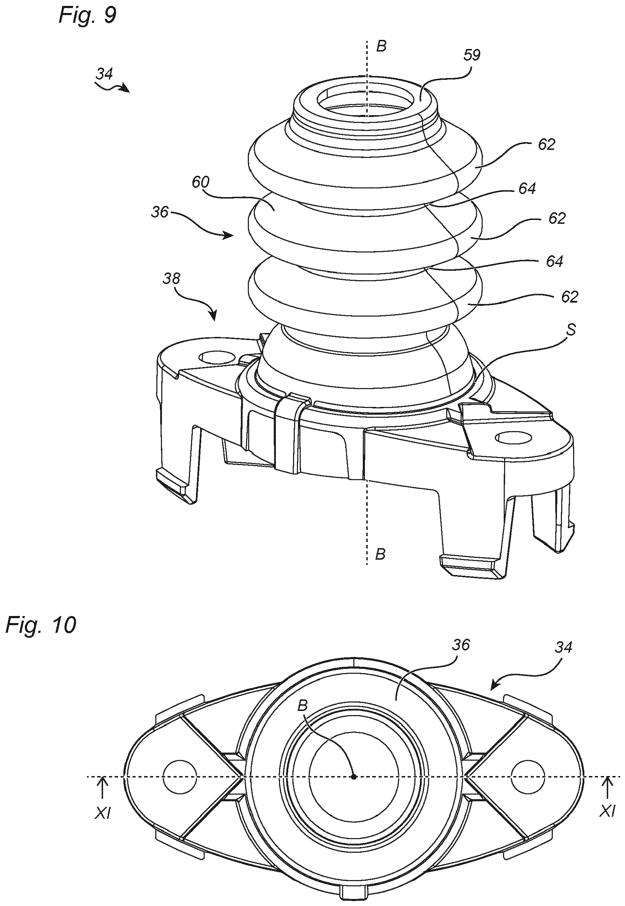

Moving on to Fig. 9, the bellows element 34 is integrally formed in a single piece. The flexible bellows 36 is made of a first, relatively softer material, while the rigid mounting substrate 38 is made of a second, relatively harder material. A separation line S demarcates the interface between the relatively softer material and the relatively harder material. The bellows 36 and the mounting substrate 38 are injection moulded in two shots, using different materials for the two shots. First, the mounting substrate 38 is injection moulded in a first shot, and thereafter, the bellows 36 is moulded onto the mounting substrate 38 in a second shot. In a preferred embodiment, the first material, i.e. the material of the bellows 36, is a thermoplastic vulcanizate, such as Santoprene^{®} 111-35 available from Celanese. The thermoplastic vulcanizate comprises vulcanized particles of EPDM (ethylene propylene diene monomer) rubber encapsulated in a thermoplastic matrix. The vulcanized rubber particles makes the bellows 36 elastically resilient, while the thermoplastic matrix makes the bellows 36 thermoplastic, thereby making it possible to mould the bellows 36 in a simple thermally cycled thermoplastic injection moulding step without the complexity of subsequent vulcanization or curing after moulding. A preferred base polymer of the thermoplastic matrix is polypropylene, which is also the base polymer of the thermoplastic matrix of Santoprene^{®} 111-35. The thermoplastic matrix of the first material also comprises a silicone additive of about 1,5% by weight of polysiloxane, which has been found to increase the tearing strength of the bellows. The silicone is added to the Santoprene^{®} 111-35 in the form of a masterbatch of 50% polypropylene and 50% silicone; an exemplary suitable material is SI-05-B masterbatch available from M. G. Polyblends.

The second material, i.e. the material of the mounting substrate 38, comprises a base polymer of polypropylene, which results in a particularly strong bond with the polypropylene matrix of the first material of the bellows 36. The second material also comprises a filler of talc. Thanks to the strong bond between the polypropylene matrix of the first material and the polypropylene of the second material, the first material can be moulded directly onto the second material as purely bonded interface without interlocking structures, which simplifies the moulding of particularly the mounting substrate 38. The bellows 36 extends along a centre axis B of the bellows 36 from the mounting substrate 38 to an end cuff 59 adapted to seal against the shell support lever 28 (Fig. 7), and is defined by a bellows mantle 60 enclosing the centre axis B. The bellows mantle 60 comprises, distributed along the centre axis B, a plurality of circumferential bulges 62 separated by waists 64. As seen in the top view of Fig. 10, the bellows is rotation symmetric about the centre axis B.

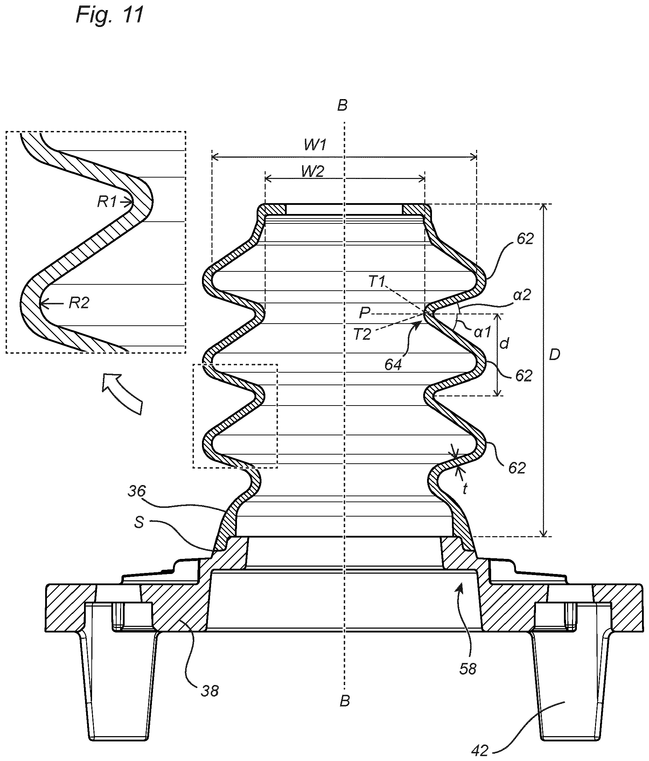

Fig. 11, which is a section along the line XI-XI indicated in Fig. 10, illustrates the bellows element 34 with the bellows 36 in an elastically relaxed state. As thermoplastic vulcanizate may be more sensitive to repeated elastic deformation than pure vulcanized rubber, various different geometric considerations have been made to minimize deformation stress of the bellows 36. The waists 64 have an inner radius of curvature R1 of about 0,8 mm, and the bulges have an inner radius of curvature R2 of about 1,5 mm. The large radii R1, R2 distribute the deformation stress when the bellows is elastically deformed, which increases the life expectancy of the bellows 36. The lower waist angle α1, i.e. the angle between a plane T1 tangential to the bellows mantle 60 at a position half-way to the next adjacent bulge 62 below the respective waist 64, and a plane P perpendicular to the bellows centre axis B, is about 35°. The upper waist angle α2, i.e. the angle between said plane P and a plane T2 tangential to the bellows mantle 60 at a position half-way to the next adjacent bulge 62 above the respective waist 64, is about 19 degrees, which results in a total waist angle α1 + α2 of about 54°. Also the large waist angle reduces deformation stress concentrations, which increases the life expectancy of the bellows 36. By having the lower waist angle α1 greater than the upper waist angle α2, accumulation of dirt in the waists 64 of the bellows 36 is minimized. The bellows 36 has three circumferential bulges 62 and three waists 64, and the waists 64 are distributed along the centre axis B with an average axial waist separation distance d of about 11 mm. The total axial length D of the bellows is about 46 mm. At the bulges 62, the inner width W1 of the bellows is about 36 mm, and at the waists 64, the inner width W2 of the bellows is about 22 mm. This corresponds to an inner bulge/waist width ratio W1/W2 of about 1,6. The thickness t of the bellows mantle is about 1,0 mm.

The bellows element 34 described hereinabove can be applied also in other sealing applications where sealing is needed between a support structure and a movable element, such as a rod, which is movable in relation to the support structure. In such a generalized context, the chassis 18 (Fig. 3A) is the support structure, and the shell support lever 28 is the movable element.

The invention has mainly been described above with reference to a few embodiments. However, as is readily appreciated by a person skilled in the art, other embodiments than the ones disclosed above are equally possible within the scope of the invention, as defined by the appended patent claims. In the claims, the word "comprising" does not exclude other elements or steps, and the indefinite article "a" or "an" does not exclude a plurality.

## Claims

1. A robotic lawnmower (12) comprising:
a chassis (18) provided with a set of wheels (20);
an outer shell (22) defining an exterior face of the robotic lawnmower (12);
a shell suspension arrangement (24) movably connecting the outer shell (22) to the chassis (18), the shell suspension arrangement (24) comprising at least one shell support lever assembly (26a; 26b; 26c; 26d), the at least one shell support lever assembly (26a; 26b; 26c; 26d) comprising a respective shell support lever (28) movably arranged relative to the chassis (18), and a respective bellows element (34) sealing between the shell support lever (28) and the chassis (18), **characterized in that** the bellows element (34) comprises a flexible bellows (36) of a first, relatively softer material integrally formed with a mounting substrate (38) of a second, relatively harder material, wherein the relatively softer material is softer than the relatively harder material.

2. The robotic lawnmower (12) according to any of the preceding claims, wherein the first material is a thermoplastic elastomer and the second material is a thermoplastic.

3. The robotic lawnmower (12) according to claim 2, wherein the thermoplastic elastomer is thermoplastic vulcanizate.

4. The robotic lawnmower (12) according to claim 3, wherein the thermoplastic vulcanizate comprises vulcanized rubber particles encapsulated in a thermoplastic matrix, wherein the thermoplastic vulcanizate comprises at least 20% by weight of said vulcanized rubber particles, and the thermoplastic matrix comprises at least 50% by weight of polypropylene.

5. The robotic lawnmower (12) according to claim 4, wherein the second material comprises a base polymer of polypropylene.

6. The robotic lawnmower (12) according to any of claims 2-5, wherein the first material comprises at least 0,5 % by weight of polysiloxane.

7. The robotic lawnmower (12) according to any of claims 2-6, wherein a bonding interface (S) between the first and second materials is free from structural interlocks between the first and second materials.

8. The robotic lawnmower (12) according to any of the preceding claims, wherein the bellows (36) extends along a centre axis (B) of the bellows (36), and is defined by a bellows mantle (60) enclosing the centre axis (B), wherein the bellows mantle (60) comprises, distributed along the centre axis (B), a plurality of circumferential bulges (62) separated by waists (64).

9. The robotic lawnmower (12) according to claim 8, wherein, when the bellows (36) is in an elastically relaxed state, at least one waist (64) has, as seen in a section plane along the centre axis (B), a smallest inner radius of curvature (R1) exceeding 0,5 mm.

10. The robotic lawnmower (12) according to any of the claims 8-9, wherein, when the bellows (36) is in an elastically relaxed state, at least one circumferential bulge (62) has, as seen in a section plane along the centre axis (B), a smallest inner radius of curvature (R2) exceeding 1 mm.

11. The robotic lawnmower (12) according to any of the claims 8-10, wherein, when the bellows (36) is in an elastically relaxed state, a waist (64) of the bellows (36) has a total waist angle (α1+α2) of more than 40°.

12. The robotic lawnmower (12) according to any of the claims 8-11, wherein, when the bellows (36) is in an elastically relaxed state, the waists (64) are distributed along the centre axis (B) with an average axial waist separation distance (d) exceeding 7 mm.

13. The robotic lawnmower (12) according to any of the claims 8-12, wherein, when the bellows (36) is in an elastically relaxed state, the bellows (36) has an inner bulge/waist width ratio (W1/W2) of less than 2,0.

14. The robotic lawnmower (12) according to any of the claims 8-13, wherein the bellows mantle (60) has an average thickness (t) exceeding 0,7 mm.

15. The robotic lawnmower (12) according to any of the preceding claims, wherein the at least one shell support lever assembly (26a; 26b; 26c; 26d) comprises a bias element (56) biasing the shell support lever (28) in an axial direction (L) of the shell support lever (28), wherein a bottom face (38b) of the mounting substrate (38), opposite to the bellows (36), comprises a mounting socket (58) receiving the bias element (56).

16. The robotic lawnmower (12) according to any of the preceding claims, wherein the mounting substrate (38) comprises a cantilever hook arrangement (40).

17. A bellows element (34) for sealing between a support structure (18) and a movable element (28) which is movable in relation to the support structure (18), the bellows element (34) comprising a flexible bellows (36) of thermoplastic vulcanizate integrally formed with a rigid mounting substrate (38) of thermoplastic for mounting the bellows element (34) to the support structure (18).

18. The bellows element (34) according to claim 17, wherein the thermoplastic vulcanizate comprises vulcanized rubber particles encapsulated in a thermoplastic matrix comprising polypropylene, and the thermoplastic of the rigid mounting substrate (38) comprises a base polymer of polypropylene.
